# EUROPÄISCHE PATENTSCHRIFT

(11) **EP 0 578 036 B1**
(45) Veröffentlichungstag und Bekanntmachung des Hinweises auf die Patenterteilung: **12.04.1995**
(21) Anmeldenummer: 93109834.7
(22) Anmeldetag: 20.06.1993
(51) Int. Cl.: B30B 3/04, B30B 15/34, B29C 43/24, B29C 43/52, B29K 21/00, B29L 7/00

(54) **Dichtungsplattenkalander und Verfahren zur Herstellung von Dichtungsplatten**
Calender and method for producing sealing sheets
Calandre et procédé pour produire des plaques d'étanchéité

(30) Priorität: 07.07.1992 DE 4222241
(43) Veröffentlichungstag der Anmeldung: 12.01.1994
(73) Patentinhaber: PAUL TROESTER MASCHINENFABRIK, D-30519 Hannover (DE)
(72) Erfinder: Kaufmann, Reinhold, W-3440 Eschwege (DE); Ramm, Hans Friedbert Dr.Ing., W-3005 Hemmingen 4 (DE)
(74) Vertreter: Junius, Walther, Dr.

(56) Entgegenhaltungen:
- EP-A- 0 451 495
- WO-A-90/14216
- CH-A- 258 371
- DE-C- 962 290
- GB-A- 2 204 266
- PLASTVERARBEITER Bd. 42, Nr. 9, September 1991, SPEYER/RHEIN DE Seite 244 'Kalandrierlinien f r PVC-Folien und Dichtungsplatten'
- Patent Abstracts of Japan vol.13, no.316(P-900)18.Juli 1989 & JP-A-10 86 318 (FUJI PHOTO FILM CO LTD) 31. März 1989

## Beschreibung

Die Erfindung betrifft einen Dichtungsplattenkalander, in dessen Ständern eine mit einem flüssigen Heizmedium beheizte Heizwalze großen Durchmessers und eine Anpreßwalze kleineren Durchmessers gelagert sind.

Ein derartiger Dichtungsplattenkalander ist aus der EP-A-0 451 495 bekannt geworden.

Dichtungsplatten werden auf besonderen Kalandern hergestellt, die eine mit einem fließfähigen Heizmedium beheizte Heizwalze großen Durchmessers und eine nicht beheizte, meist gekühlte Anpreßwalze kleineren Durchmessers aufweisen. Die Dichtungsplatten werden in einem diskontinuierlichen Verfahren hergestellt, in dem eine aus vorgemischter Kautschukmasse, Fasern und Lösungsmittel bestehende Mischung in den Walzenspalt eingegeben wird, die dann in feinsten Lagen während vieler Heizwalzenumdrehungen auf die Heizwalze aufgewalzt wird. Die aufgewalzte Schicht wird während der Umdrehungen der Heizwalze durch die von der Heizwalze abgegebene Wärme vulkanisiert und bildet dann eine hohlzylindrische Dichtungsplatte, die durch einen achsparallelen Schnitt aufgetrennt wird, von der Heizwalze abgezogen und in die Form einer Platte gebracht wird.

Da die früher verwendeten Mischungen aus Kautschukmasse, Asbestfasern und Lösungsmittel heute nicht mehr zulässig sind, ist die Herstellung von Dichtungsplatten durch die verfügbaren Ersatzfasern erheblich schwieriger geworden, da die Verfahrensparameter hinsichtlich der Temperatur und der Drehzahl sehr viel kritischer geworden sind. Die Mischungen für die Herstellung der Dichtungsplatten besitzen stark wärmeisolierende Eigenschaften, so daß die im Aufbau befindliche Dichtungsplatte, je stärker sie wird, um so stärker als Wärmedämmung wirksam wird, was zur Folge hat, daß die Temperatur an der Oberfläche der aufgewalzten Schicht immer mehr abnimmt, wodurch die Vulkanisation verlangsamt und ungleichmäßig wird. Um dennoch auch äußere Lagen der Schicht genügend auszuvulkanisieren, muß im Laufe des Arbeitsprozesses die Drehgeschwindigkeit der Heizwalze herabgesetzt werden, was den Arbeitsprozeß unwirtschaftlicher macht. Die mit stärker werdender aufgewalzter Schicht zunehmende Temperaturabnahme führt auch zu Qualitätsbeeinflussungen des erzeugten Produktes.

Während der Erhitzung für die Durchführung der Vulkanisation verdampft das in der Mischung vorhandene Lösungsmittel. Es ist in einem Absaug- und/oder Schutzgehäuse aufzufangen, das den ganzen Dichtungsplattenkalander zu umschließen hat.

Durch die DE-C-962 290 ist es bekannt geworden, bei einer um eine gleichzeitig eine Aufheizung und eine Abkühlung vornehmenden Walze herumgeschlungenen Warenbahn die Aufheizung sowohl durch den beheizten Teil der Walze als auch durch eine Strahlungsheizung von außen vorzunehmen. Die fest angebrachte Strahlungseinrichtung würde aber bei einer Anwendung an einem Dichtungsplattenkalander den Abzug der jeweils fertiggestellten Dichtungsplatte behindern.

Die Erfindung vermeidet die Nachteile des Standes der Technik. Es ist die Aufgabe der Erfindung, mit einfachen Mitteln eine Möglichkeit zu schaffen, um den Steuerungsaufwand bei der Herstellung von Dichtungsplatten herabzusetzen und die Temperatur der Oberfläche der Schicht unabhängig von ihrer Stärke möglichst weitgehend homogen und gleich der Temperatur der Heizwalzenoberfläche zu halten.

Die Erfindung besteht darin, daß um einen Teil des Umfanges der Heizwalze mindestens eine Klappe angeordnet ist, die einen Teil eines Absaug- und/oder Schutzgehäuses bildet und daß diese Klappe Träger einer auf die Außenfläche der Heizwalze gerichteten über deren gesamte Breite Wärme abgebenden Wärmequelle ist, so daß eine zusätzliche Beheizung der auf der Heizwalze sich aufbauenden Dichtungsplatte von außen erfolgt.

Hierdurch ist zweierlei durch eine Maßnahme erreicht: Klappen, die einen Teil eines Absaug- und/oder Schutzgehäuses bilden, sind gleichzeitig Träger von Wärmequellen, die die Außenfläche der auf der Heizwalze aufgewalzten im Herstellungsprozeß befindlichen Dichtungsplatte beheizen. Dadurch können einerseits die Lösungsmitteldämpfe von den Betriebsräumen ferngehalten werden, zum anderen aber kann die Herstellung der Platte in stark vereinfachter Weise erfolgen. Denn durch die Beheizung von außen, kann die Oberfläche der auf die Heizwalze aufgewalzten Schicht gleich oder nahezu gleich der Temperatur der Oberfläche der Heizwalze gehalten werden. Damit ist erreicht, daß auch zwischen der Oberfläche der Schicht und der Oberfläche der Heizwalze alle aufgewalzten Lagen der Schicht gleiche Temperatur haben. Das erleichtert die Maschinenführung erheblich. Die Prozeßsteuerungen werden einfacher und es können auch bisher nicht verwendbare Mischungen zu einer Dichtungsplatte verarbeitet werden. Die Prozeßdauer wird abgekürzt, weil die Heizwalze nunmehr über den gesamten Fertigungsvorgang gleiche oder nahezu gleiche Drehgeschwindigkeit beibehalten kann.

Vorteilhaft ist es, wenn die Klappe durch Servomotore verschwenkbar ist, die an den Ständern angelenkt sind. Solche Servomotore sind beispielsweise Hydraulik-Kolben-Zylinder-Einheiten. Diese erlauben ein schnelles Öffnen und Schließen der Klappen und vermeiden jede Handtätigkeit am Ende und am Anfang des Herstellungsprozesses.

Weiterhin ist es vorteilhaft, wenn eine Klappe den rückwärtigen Teil der Heizwalze umfaßt, aber auch, wenn eine weitere Klappe oder ein Träger einer Wärmequelle den unteren, freien Teil der Heizwalze umfaßt, wenn eine weitere Klappe einen oberen Teil der Heizwalze umfaßt.

Das Wesen der vorliegenden Erfindung ist nachstehend anhand eines in der Zeichnung schematisch dargestellten Ausführungsbeispieles näher erläutert. Es zeigen:

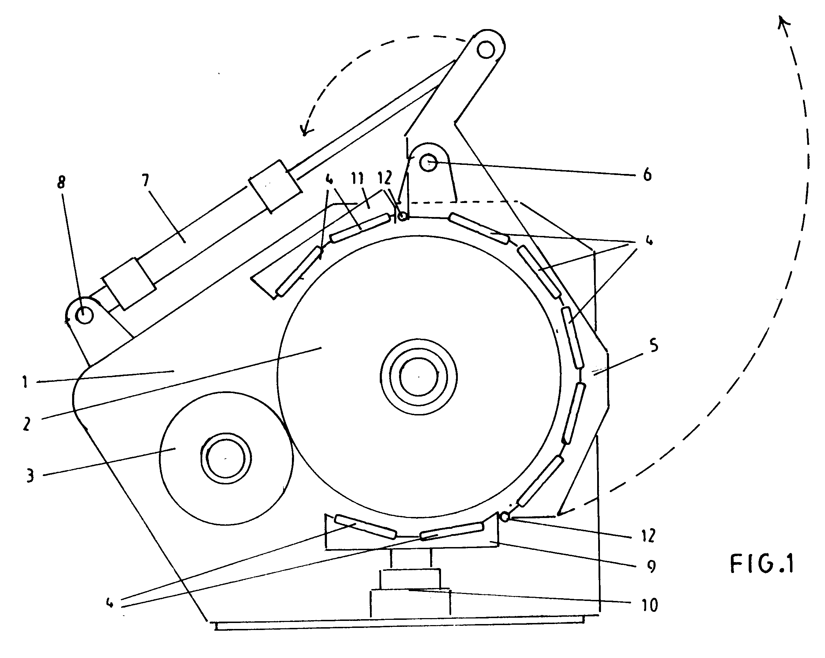

- Fig. 1: einen Schnitt durch den Dichtungsplattenkalander,

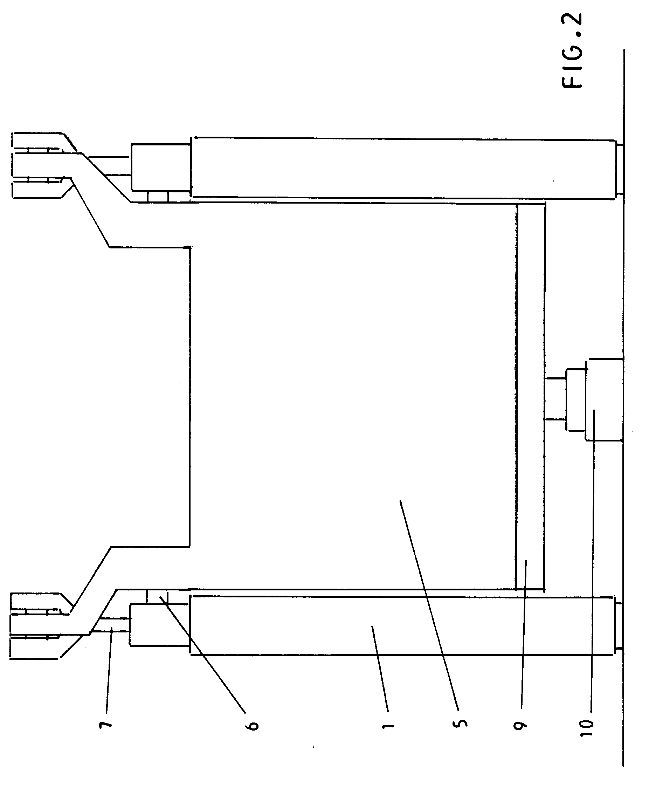

- Fig. 2: eine Rückseitenansicht dieses Kalanders.

Der Dichtungsplattenkalander besteht aus zwei Ständern 1, in denen die Heizwalze 2 und die Anpreßwalze 3 gelagert sind. Die Heizwalze 2 wird durch unter Druck stehendes heißes Wasser beheizt, die Anpreßwalze 3 wird nicht beheizt sondern gekühlt.

Erfindungsgemäß ist die Heizwalze 2 von Wärmequellen 4 teilweise umgeben. Einige Wärmequellen sitzen auf der Klappe 5, die um den Drehpunkt 6 mit Hilfe des Servomotors 7, der im Drehpunkt 8 am Ständer 1 gelagert ist, verschwenkbar ist. Der Servomotor ist eine Kolben-Zylinder-Einheit, kann aber auch ein pneumatischer, hydraulischer, mechanischer oder elektrischer Drehmotor sein.

Mit der Klappe 5 läßt sich nur ein Teil des Umfanges der Heizwalze 2 umfassen. Deshalb ist ein Träger 9 für Wärmequellen 4 vorgesehen, welcher mit Hilfe des Servomotors 10 aus einer Stellung in der Nähe des Bodens bis vor die Oberfläche der Heizwalze 2 verschoben werden kann.

Es kann auch zweckmäßig sein, an dieser Stelle ebenfalls eine Klappe als Träger für die Wärmequellen 4 vorzusehen, welche einen Drehpunkt etwa im unteren Walzenspalt aufweist und mit der die Wärmequellen 4 tragende Klappe aus einer genähert horizontalen Lage nach unten in eine genähert vertikale Lage verschwenkt werden kann.

Links oberhalb der Heizwalze 2 sind weitere Wärmequellen 4 an einem weiteren Träger 11 angeordnet. Dieser weitere Träger 11 ist fest zwischen den Ständern 1 des Dichtungsplattenkalanders montiert.

Diese drei Wärmequellen 4 tragenden Elemente 5,9,11 liegen durch Dichtungsstreifen 12 voneinander getrennt während des Betriebes luftdicht aneinander an. Dadurch wird von diesen Elementen eine die Heizwalze 2 nahezu vollständig umgebende Schutzhaube gebildet, aus der Lösungsmitteldämpfe abgezogen werden können.

## Patentansprüche

1. Dichtungsplattenkalander,
in dessen Ständern eine mit einem flüssigen Heizmedium beheizte Heizwalze (2) großen Durchmessers und eine Anpreßwalze kleineren Durchmessers gelagert sind,
dadurch gekennzeichnet,
daß um einen Teil des Umfanges der Heizwalze (2) mindestens eine Klappe (5) angeordnet ist, die einen Teil eines Absaug- und/oder Schutzgehäuses bildet
und daß diese Klappe (5) Träger mindestens einer auf die Außenfläche der Heizwalze gerichteten über deren gesamte Breite Wärme abgebenden Wärmequelle (4) ist.

2. Dichtungsplattenkalander nach Anspruch 1,
dadurch gekennzeichnet,
daß die Klappe (5) durch Servomotore (7) verschwenkbar ist, die an den Ständern (1) angelenkt sind.

3. Dichtungsplattenkalander nach Anspruch 1,
dadurch gekennzeichnet,
daß eine Klappe (5) den rückwärtigen Teil der Heizwalze (2) umfaßt.

4. Dichtungsplattenkalander nach Anspruch 1,
dadurch gekennzeichnet,
daß eine weitere Klappe oder ein Träger (9) mindestens einer Wärmequelle den unteren freien Teil der Heizwalze (2) umfaßt.

5. Dichtungsplattenkalander nach Anspruch 1,
dadurch gekennzeichnet,
daß eine weitere Klappe (11) mit mindestens einer Wärmequelle einen oberen Teil der Heizwalze (2) umfaßt.

## Claims

1. Sealing sheet calender in the uprights of which are mounted a heating roller (2) of large diameter heated with a liquid heating medium, and a pressure roller of smaller diameter, characterised in that at least one flap (5), which forms a part of an extraction and/or protective housing, is disposed around a part of the circumference of the heating roller (2) and in that this flap (5) is a carrier for at least one heat source (4) directed at the external surface of the heating roll and giving off heat over its entire width.

2. Sealing sheet calender according to claim 1, characterised in that the flap (5) can be pivoted by means of servo motors (7) which are articulated on the uprights (1).

3. Sealing sheet calender according to claim 1, characterised in that a flap (5) covers the rearward part of the heating roller (2).

4. Sealing sheet calender according to claim 1, characterised in that a further flap or a carrier (9) for at least one heat source covers the lower free part of the heating roller (2).

5. Sealing sheet calender according to claim 1, characterised in that a further flap (11) with at least one heat source covers an upper part of the heating roller (2).

## Revendications

1. Calandre pour panneaux d'étanchéité, dans les montants de laquelle sont montés tourillonnants un rouleau chauffant (2) de grand diamètre, chauffé par un produit chaud fluide, et un rouleau presseur de plus petit diamètre,
caractérisée
par le fait qu'autour d'une partie de la périphérie du rouleau chauffant (2) est disposé au moins un volet (5) qui forme une partie d'un capotage d'aspiration et/ou de protection
et que ce volet (5) est le support d'au moins une source de chaleur (4) dirigée sur la surface extérieure du rouleau chauffant et émettant de la chaleur sur toute la largeur de ce rouleau.

2. Calandre pour panneaux d'étanchéité selon la revendication 1,
caractérisée
par le fait que le volet (5) peut pivoter sous l'action de servomoteurs (7) qui sont articulés sur les montants (1).

3. Calandre pour panneaux d'étanchéité selon la revendication 1,
caractérisée
par le fait qu'un volet (5) entoure la partie arrière du rouleau chauffant (2).

4. Calandre pour panneaux d'étanchéité selon la revendication 1,
caractérisée
par le fait qu'un autre volet ou un support (9) d'au moins une source de chaleur entoure la partie inférieure libre du rouleau chauffant (2).

5. Calandre pour panneaux d'étanchéité selon la revendication 1,
caractérisée
par le fait qu'un autre panneau (11) comportant au moins une source de chaleur entoure une partie supérieure du rouleau chauffant (2).
